Europäisches Patentamt

European Patent Office

Office européen des brevets

(19)

(11)  **EP 0 382 052 B2**

(12)  **NEUE EUROPÄISCHE PATENTSCHRIFT**

(45)  Veröffentlichungstag und Bekanntmachung des Hinweises auf die Entscheidung über den Einspruch:
**05.10.2005   Patentblatt 2005/40**

(45)  Hinweis auf die Patenterteilung:
**05.01.1994   Patentblatt 1994/01**

(21)  Anmeldenummer: **90101788.9**

(22)  Anmeldetag: **30.01.1990**

(51)  Int Cl.⁷: $C08G\ 18/08$, $C08G\ 18/10$, $C09J\ 175/04$

(54)  **Herstellung von emulgatorfreien, wässrigen Polyurethandispersionen**

Preparation of aqueous emulsifier-free polyurethane dispersions

Préparation de dispersions de polyuréthane aqueuses sans émulsifiant

(84)  Benannte Vertragsstaaten:
**AT BE CH DE ES FR GB IT LI NL SE**

(30)  Priorität: **07.02.1989   DE 3903538**

(43)  Veröffentlichungstag der Anmeldung:
**16.08.1990   Patentblatt 1990/33**

(73)  Patentinhaber: **BASF Aktiengesellschaft**
**67063 Ludwigshafen (DE)**

(72)  Erfinder:
• **Fisch, Herbert, Dr.**
  **D-6706 Wachenheim (DE)**
• **Maempel, Lothar, Dr.**
  **D-6835 Bruehl (DE)**
• **Volkert, Otto, Dr.**
  **D-6719 Weisenheim (DE)**

(56)  Entgegenhaltungen:
DE-A- 2 930 410            DE-C- 1 770 068
FR-A- 2 098 341            FR-A- 2 099 457
FR-A- 2 301 578

EP 0 382 052 B2

**Beschreibung**

Die vorliegende Erfindung betrifft ein Verfahren zur Herstellung einer emulgatorfreien, wäßrigen Polyurethandispersion durch Umsetzung von (a) Dihydroxylverbindungen mit einem Molekulargewicht von 500 bis 5000, (b) Diisocyanaten und (c) Kettenverlängerungsmitteln ohne Salzgruppen mit mindestens 2 gegenüber Isocyanatgruppen reaktionsfähigen Wasserstoffatomen und einem Molekulargewicht unter 300 in der Schmelze oder in Gegenwart eines unter 100°C siedenden, mit Wasser mischbaren, inerten organischen Lösungsmittels (L) zu einem Prepolymeren mit endständigen Isocyanatgruppen, anschließende Umsetzung des - gegebenenfalls in einem organischen Lösungsmittel (L) gelösten - Prepolymeren mit (d) - gegebenenfalls in Wasser gelösten - Alkahsalzen der Additionsprodukte von Ethylendiamin an ungesättigte Carbonsauren, Dispergieren des erhaltenen Polyurethans in Wasser und - gegebenenfalls - destillative Entfernung des organischen Lösungsmittels.

Die Erfindung betrifft des weiteren die Verwendung der erhaltenen Verfahrensprodukte, d.h. der - elastomeren - Polyurethane als Klebstoff.

In diesem Zusammenhang ist zunächst festzustellen, daß es bekannt ist, die betroffenen Polyurethan-Elastomere als Klebstoffe einzusetzen; vgl. hierzu z.B. Kunststoff-Handbuch, Band 7, Juli 1983, Seiten 588 bis 590.

Aus der FR-A-2 099 457, der FR-A-2 301 578 und der FR-A-2 098 341 sind emulgatorfreie, wäßrige Dispersionen von Polyurethanen oder Polyacrylaten bekannt, die mit Formaldehyd oder Formaldehydkondensaten vernetzt werden können.

Es ist auch bekannt, daß bei den bislang als Klebstoff bekannten Polyurethanen von Nachteil ist die geringe Löslichkeit in geeigneten Lösungsmitteln (Azeton, Methylethylketon), so daß beim Kleben große Mengen an Lösungsmittel abgedunstet werden müssen. Es wird daher seit längerem versucht, Elastomere in Form von wäßrigen Dispersionen zu verarbeiten; vgl. hierzu z.B. das oben zitierte Kunststoff-Handbuch, Seiten 591 ff. Die Stabilisierung der wäßrigen Dispersionen erfolgt dabei gewöhnlich durch eingebaute ionische Gruppen. Nachteilig an diesen Dispersionen ist, daß man beim Verkleben relative hohe (80 °C oder höher) Aktivierungstemperaturen benötigt, um den getrockneten Klebefilm in die für das Verkleben notwendige Konsistenz zu bringen, bzw. daß die bei einer gegebenen Aktivierungstemperatur erhaltenen Anfangshaftfestigkeiten des Systems zu niedrig liegen. Unter Anfangshaftfestigkeiten versteht man dabei die unmittelbar nach kurzem Aktivieren und Zusammenpressen der zu verklebenden Flächen gemessenen Klebefestigkeiten.

Weiterhin ist bekannt, daß bei Polyurethanklebern, die aus organischer Lösung verarbeitet werden, die Anfangshaftfestigkeit durch Zusatz bestimmter Harze zu verbessern ist; vgl. hierzu z.B. D. Dietrich, Angew. Makromol. Chem., Band 98, 1981, Seiten 133 bis 165. Diese Harze sind aber nur in organischen Lösungsmitteln löslich und wirksam. Das Zumischen derartiger Harzlösungen zu wäßrigen PolyurethanDispersionen ergibt Produkte ohne verbesserte Haftfestigkeit.

Im gegebenen Zusammenhang ist auch festzuhalten, daß die Herstellung wäßriger PolyurethanDispersionen auf verschiedenen Wegen erfolgen kann; vgl. hierzu etwa D. Dietrich, Progress in Organic Coatings, Band 9, 1981, Seiten 281 bis 340. Relativ einfach ist das sogenannten "Azeton-Verfahren". Dabei wird das Polyurethan-Ionomere in mehreren Schritten in azetonischer Lösung hergestellt und anschließend durch Zugabe von Wasser in eine wäßrige Dispersion überführt. Das noch im Wasser gelöste Azeton wird zum Schluß im Vakuum abdestilliert.

Innerhalb des somit vorgegebenen Rahmens wurde einerseits beobachtet, daß man haftverbessernde Harze sehr einfach in die wäßrige Dispersion einbringen kann, wenn man zur azetonischen Lösung des Polyurethan-Ionomeren eine entsprechende Menge einer azetonischen Lösung des betreffenden Harzes gibt und anschließend mit Wasser dispergiert. Man erhält dann stabile Dispersionen, wobei das zugesetzte Harz sich im Innern der Dispersionskügelchen befindet, während außen die stabilisierende Polyurethanlonomerschicht liegt.

Andererseits und insbesondere aber wurde gefunden, daß wichtige Eigenschaften der Klebeschichten entscheidend von dem eindispergierten Harzzusatz mitbestimmt werden.

So gelang es, vor allem die Anfangsfestigkeit von Polyurethan-Dispersionsklebern zu steigern, wenn man vor dem Dispergieren in Wasser 5 bis 60 Gew.-Teile, bezogen auf 100 Gew.-Teile des Polyurethans, eines organischen Kondensations-Harzes, das in einem unter 100°C siedenden Lösungsmittel gelöst ist, zumischt, namentlich ein organisches Formaldehyd-Kondensations-Harz der Art der Phenol-FormaldehydKondensate, etwa vom Novolak- bzw. Resol-Typ.

Gegenstand der vorliegenden Erfindung ist dementsprechend ein Verfahren zur-Herstellung einer emulgatorfreien, wäßrigen Polyurethandispersion durch Umsetzung von (a) Dihydroxylverbindungen mit einem Molekulargewicht von 500 bis 5000, (b) Diisocyanaten und (c) Kettenverlängerungsmitteln ohne Salzgruppen mit mindestens 2 gegenüber Isocyanatgruppen reaktionsfähigen Wasserstoffatomen und einem Molekulargewicht unter 300 in der Schmelze oder in Gegenwart eines unter 100°C siedenden, mit Wasser mischbaren, inerten organischen Lösungsmittels (L) zu einem Prepolymeren mit endständigen Isocyanatgruppen, anschließende Umsetzung des - gegebenenfalls in einem organischen Lösungsmittel (L), gelösten - Prepolymeren mit (d) - gegebenenfalls in Wasser gelösten - Alkalisalzen der Additionsprodukte von Ethylendiamin an ungesättigte Carbonsäuren, Dispergieren des erhaltenen Polyurethans in Wasser und - gegebenenfalls - destillative Entfernung des organischen Lösungsmittels
wobei man vor dem Dispergieren des erhaltenen Polyurethans in Wasser 5 bis 60, insbesondere 10 bis 50 Gew.
-Teile, bezogen auf 100 Gew.-Teile des Polyurethans, eines organischen Kondensations-Harzes, das in einem unter
100°C siedenden Lösungsmittel gelöst ist, zumischt und wobei das molar Verhältnis der Komponente (a) zu der Summe
der Isocyanate (b) sowie zu der Summe der Kettenverlängerungsmittel (c) und der Komponente (d) im Bereich von a:
b: (c+d)=1:2:1 bis 1 : 14 : 13 liegt.

Eine bevorzugte Variante des erfindungsgemäßen Verfahrens ist dadurch gekennzeichnet, daß man als organisches Kondensations-Harz Phenol-Formaldehyd-Kondensats-Harz einsetzt. Hiervon besonders geeignet sind solche mit Molgewichten (Gewichtsmittel $\overline{M}$w) zwischen 500 und 3000 sowie Erweichungstemperaturen im Bereich zwischen 80 und 150°C.

Wie sich ferner gezeigt hat, können für den erfindungsgemäßen Zweck als Kondensations-Harz mit besonderem Erfolg auch eingesetzt werden Epoxid-Bisphenol A-Addate, insbesondere solche mit Molgewichten (Gewichtsmittel $\overline{M}$w) zwischen 500 und 2000 sowie Erweichungstemperaturen im Bereich zwischen 80 und 130°C.

Die erfindungsgemäßen Verfahrensprodukte werden bevorzugt als Klebstoff verwendet.

Zum erfindungsgemäßen Verfahren selbst ist im einzelnen das folgende zu bemerken:
Die Herstellung der salzgruppenhaltigen Polyurethan-Ionomeren erfolgt in an sich bekannter Weise durch Umsetzung
von (a) Dihydroxylverbindungen mit einem Molekulargewicht von 500 bis 5000, (b) Diisocyanaten und (c) Kettenverlängerungsmitteln ohne Salzgruppen mit mindestens 2 gegenüber Isocyanatgruppen reaktionsfähigen Wasserstoffatomen und einem Molekulargewicht unter 300 in der Schmelze oder in Gegenwart eines unter 100°C siedenden, mit
Wasser mischbaren, inerten organischen Lösungsmittels (L) zu einem Prepolymeren mit endständigen Isocyanatgruppen, anschließende Umsetzung des - gegebenenfalls mit (weiterem) Lösungsmittel (L) verdünnten - Prepolymeren mit
(d) - gegebenenfalls in Wasser gelösten Alkalisalzen der Additionsprodukte von Ethylendiamin an ungesättigte Carbonsäuren Anschließend wird das im organischen Lösungsmittel gelöste Ionomere mit einer 5 - 60%igen Lösung des
haftverbessernden Harzes in einem unter 100°C siedenden und mit Wasser mischbaren, organischen Lösungsmittel
versetzt, die erhaltene Lösung durch Zugabe von Wasser dispergiert und - gegebenenfalls - das organische Lösungsmittel destillativ entfernt.

Geeignete Dihydroxylverbindungen (a) mit eienem Molekulargewicht von 500 bis 5000 sind die bekannten
Polyester, Polyether, Polythioether, Polylactone, Polyacetale, Polycarbonate und Polyesteramide mit 2 entständigen
Hydroxylgruppen. Bevorzugt werden solche Dihydroxylverbindungen, deren Molekulargewichtsbereich zwischen 750
und 3000 liegt. Selbstverständlich können auch Gemische dieser höhermolekularen Dihydroxylverbindungen untereinander eingesetzt werden.

Geeignete aliphatische, cycloaliphatische und aromatische Diisocyanate (b) sind z.B. 1,4-Butandiiosocyanat,
1,6-Hexandiisocyanat, 2,2,4- und 2,4,4-Trimethylhexamethylendiisocyanat, Cyclohexandiisocyanat, Methylcyclohexandiisocyanat, Isophorondiisocanat, 4,4'-Diisocyanatodiphenylmethan, 4,4'-Diisocyanatodicyclohexalmethan, 2,4-
und 2,6-Toluoldiisocyanat, sowie deren technische Isomerengemische. Das molare Verhältnis der (cyclo)aliphatischen
zu den aromatischen Diisocyanaten liegt zweckmäßig im Bereich von 1 : 1 bis 1 : 6.

Geeignete Kettenverlängerungsmittel (c) mit mindestens zwei gegenüber Isocyanatgruppen reaktionsfähigen
Wasserstoffatomen mit einem Molekulargewicht unter 300 ohne Salzgruppen sind die üblichen Glykole, wie Ethylenglykol, Propylenglykol, Butandiol-1,3 und -1,4- Hexandiol, Neopentylglykol, Cyclohexandiol, 2,2-Bis-(4-hydroxycyclohexyl)-propan, 2,2-Bis-(%-hydroxyethoxyphenyl)-propan, Diethylenglykol oder Dipropylenglykol, Diamine, wie Ethylendiamin, Piperazin, Isophorondiamin, Toluoldiamin, Diaminodiphenylmethan wie Aminoalkohole, Hydrazin und gegebenenfalls auch Wasser.

Geeignete wasserlösliche Salze (d) sind z.B. in der DE-OS 20 34 479 oder DE-OS 19 54 090 beschrieben.
Es sind dies die Alkalisalze, insbesondere die Natrium- oder Kaliumsalze, der Additionsprodukte von Ethylendiamin
an ungesättigte Carbonsäuren, wie (Meth)Acrylsäure, Crotonsäure oder Maleinsäure, Allgemein bevorzugt werden
Verbindungen mit zwei an verschiedene Stickstoffatome gebundenen Wasserstoffatomen sowie mit nur einer Salzgruppe im Molekül, also Verbindungen, die das Produkt wohl dispergierbar, aber nicht allzu hydrophil machen und die
außerdem zur Kettenverlängerung geeignet sind. Sie werden in solchen Mengen angewandt, daß das erhaltene Polyurethan 0,02 bis 1 Gew.% salzartige Gruppen enthält.

Geeignete tertiäre Amine bzw. ihre Salze sind tertiäre Amine, die zusätzlich im Molekül noch 2 Hydroxyl- oder
2 primäre oder sekundäre Aminogruppen enthalten.

Die Isocyanatgruppen und die mit Isocyanat reaktionsfähigen Hydroxyl- und Aminogruppen sollen in ungefähr
äquivalenten molaren Verhältnissen eingesetzt werden. Das Verhältnis der Zahl der Isocyanatgruppen zur Zahl der
insgesamt im Isocyanat reaktionsfähigen Wasserstoffatome soll im Bereich zwischen 0,9 und 1,2, bevorzugt zwischen
1,0 und 1,1 liegen.

Die Dihydroxylverbindungen mit einem Molekulargewicht von 500 bis 5000 (a), Diisocyanate (b), Kettenverlängerungsmittel mit einem Molekulargewicht unter 300 (c) und wasserlöslichen Salze aliphatischer Aminocarbonsäuren oder Aminosulfonsäuren (d) werden in solchen molaren Verhältnissen eingesetzt, daß das Verhältnis der Komponente (a) zu der Summe der Diisocyanate (b) sowie zu der Summe der Kettenverlängerungsmittel (c) und der Komponente (d) im Bereich von a : b : (c + d) = 1 : 2 : 1 bis 1 : 14 : 13 liegt. Besonders vorteilhaft ist der Bereich von 1 : 4 : 3 bis 1 : 10 : 9.

Zur Beschleunigung der Reaktion der Diisocyanate können die üblichen und bekannten Katalysatoren, wie Dibutylzinndilaurat, Zinn-(II)-octoat oder 1,4-Diazabicyclo-(2,2-2)-octan, mitverwendet werden.

Die Herstellung der wäßrigen Polyurethandispersionen erfolgt in an sich bekannter Weise durch Umsetzung der Dihydroxylverbindungen mit einem Molekulargewicht von 500 bis 5000 mit den Diisocyanaten und den Kettenverlängerungsmitteln mit einem Molekulargewicht unter 300 ohne Salzgruppen in der Schmelze oder gegebenenfalls in Gegenwart eines unter 100°C siedenden und mit Wasser mischbaren, inerten organischen Lösungsmittels, gegebenenfalls unter Druck, zu einem Präpolymeren mit endständigen Isocyanatgruppen.

Die erfindungsgemäß zu verwendenden aromatischen und (cyclo)aliphatischen Diisocyanate können dabei entweder im Gemisch miteinander oder auch in der genannten Reihenfolge nacheinander mit den Dihydroxylverbindungen und den Kettenverlängerungsmitteln umgesetzt werden. Auf Grund der unterschiedlichen Reaktionsfähigkeit der beiden Diisocyanate ist es häufig ausreichend, die Diisocyanate im Gemisch miteinander einzusetzen. Werden sie nacheinander mit den Dihydroxylverbindungen und den Kettenverlängerungsmitteln umgesetzt, dann ist es vorteilhaft, zuerst das aromatische und dann das (cyclo)-aliphatische Diisocyanat einzusetzen, um sicherzustellen, daß das Reaktionsprodukt mittelständige Segmente aus aromatischen Diisocyanat und Kettenverlängerungsmittel sowie entständige (cyclo)aliphatische Isocyanatgruppen aufweist. Bei der stufenweisen Umsetzung der beiden Diisocyanate ist es nicht wesentlich, vor der Zugabe des (cyclo)aliphatischen Diisocyanats das aromatische Diisocyanat vollständig umzusetzen, sondern das (cyclo)aliphatische Diisocyanat kann häufig bereits zu einem Zeitpunkt zugesetzt werden, zu dem erst ein Teil des aromatischen Diisocyanats reagiert hat.

Das so erhaltene Polyurethanpräpolymere mit endständigen aliphatischen oder cycloaliphatischen Isocyanatgruppen wird gegebenenfalls mit einem mit Wasser mischbaren, unter 100°C siedenden und gegenüber Isocyanatgruppen inerten Lösungsmittel weiter verdünnt und bei einer Temperatur zwischen 20 und 50°C mit den wasserlöslichen Salzen von aliphatischen Aminocarbon- oder -sulfonsäuren oder ihren Salzen, welche zusätzlich mindestens 2 mit Isocyanatgruppen reaktionsfähige Wasserstoffatome im Molekül haben, versetzt. Gegebenenfalls können diese "ionischen Kettenverlängerer" in Form einer wäßrigen Lösung zugegeben werden. Die Umsetzung dieser Salze mit den Isocyanatgruppen erfolgt spontan und führt zur Kettenverlängerung.

Zur Lösung des so erhaltenen Polyurethans wird nun eine Lösung des haftverbessernden Harzes in einem unter 100°C siedenden und mit Wasser mischbaren inerten organischen Lösungsmittel gegeben.

Als haftverbessernde Harze eignen sich bevorzugt Phenol-Formaldehyd-Harze auf Novolakbasis. Epoxidharze und Resoltypen ergeben ebenfalls den erwünschten Effekt.

Die Harze lassen sich in Konzentrationen von 5 - 50 % eindispergieren. Der Gesamtfaststoffgehalt der Dispersionen ist bis zu 50 % variabel.

In die Lösung des Polyurethan-Ionomeren und Harzes wird am Schluß Wasser eingerührt und das organische Lösungsmittel destillativ entfernt. Man erhält dabei feinteilige, stabile Dispersionen, die durch Eindampfen gegebenenfalls aufkonzentriert werden können. Im allgemeinen werden lösungsmittelfreie Latices mit einem Festkörpergehalt von 30 - 50 % bevorzugt.

Als niedrigsiedende Lösungsmittel kommen gegenüber Isocyanat inerte polare Lösungsmittel mit Siedepunkten unter 100°C in Frage, die mit Wasser mischbar sind, z.B. Aceton, Tetrahydrofuran oder Methylethylketon.

Die in den nachfolgenden Beispielen verwendeten Symbole haben die nachstehend wiedergegebene Bedeutungen:

PE =      Polyesterol aus
ADS =     Adipinsäure
B 14 =     Butandiol-(1,4)
DBTL =     Dibutylzinndilaurat
TDI =     Toluidendiisocyanat
HDI =     Hexamethylendiisocyanat
PUD =     Na-Salz des Michaeladukts aus Acrylsäure und Ethylendiamin als salzgruppenhaltiges Kettenverlängerungsmittel)
IPDA =     Isophorondiamin

Beispiel 1

Ausgangsstoffe:

350 g PE ADS/B14 (Molekulargew. $\overline{M}$w 2300)
0,05 g DBTL-Katalysator
94 g Aceton I
17,26 g TDI
16,92 HDI
375 g Aceton II
10,35 g PUD
170 g Phenolnovolak-Harz (Phenol-Formaldehyd-Kondensat, $\overline{M}$w = etwa 600, Erweichungstemperatur = 95 bis 105°C)
170 g Aceton III
805 g $H_2O$

Verfahrensweise:

Zur Mischung aus dem entwässerten Polyesterol PE, Aceton I und Katalysator wird das TDI zugegeben. Nach 1 Stunde Reaktionszeit bei 60°C wird das HDI zugesetzt und weitere 2 Stunden umgesetzt. Nach Zulauf des Aceton II hat die erhaltene Polymerlösung einen NCO-Gehalt von 0,6 %. Bei 50 °C wird mit PUD kettenverlängert. Nach 5 Minuten wird das Phenolnovolak-Harz gelöst in Aceton III zugemischt und 5 Minuten bei 50 °C gehalten. Danach wird mit Wasser dispergiert und anschließend das Aceton abdestilliert.
Man erhält eine feinteilige stabile PUR-Dispersion mit einem Feststoffgehalt von 42 %.

Beispiel 2

Ausgangsstoffe:

500 g PE ADS/B14 (Molekulargew. $\overline{M}$w 2300)
0,07 g DBTL
134 g Aceton I
24,9 g TDI
24,4 g HDI
537 g Aceton II
14,81 g PUD
242 g Koreforte (Phenol-Formaldehyd-Kondensat $\overline{M}$w = etwa 2000 bis 2800, Erweichungstemperatur = 100 bis 150°C)
249 g Aceton III
1208 g Wasser

Verfahrensweise:

Zur Mischung aus entwässertem Polyesterol, Aceton I und Katalysator wird das TDI zugegeben. Nach 1 Stunde Reaktionszeit bei 60 °C wird das HDI zugesetzt und weitere 2 Stunden umgesetzt. Nach Zulauf des Aceton II hat die erhaltene Polymerlösung einen NCO-Gehalt von 0,6 %. Bei 50°C wird mit PUD kettenverlängert. Nach 5 Minuten wird das Koreforte, gelöst in Aceton III zugemischt und 10 Minuten bei 50 °C gehalten. Danach wird mit Wasser dispergiert und anschließend das Aceton abdestilliert.
Man erhält eine feinteilige stabile Polyurethan-Dispersion mit einem Feststoffgehalt von 43 %.

Beispiel 3

Ausgangsstoffe:

500 g PE ADS/B14 (Molekulargew. $\overline{M}$w 2300)
0,08 g DBTL
134 g Aceton I
24,9 g TDI
24,4 g HDI
537 g Aceton II
14,8 g PUD
242 g thermoplastisches Phenol-Formaldehyd-Kondensat, $\overline{M}$w = etwa 1000 bis 1600, Erweichungstemperatur = 85 bis 105 °C
249 g Aceton III
1208 g Wasser

Verfahrensweise:

Wie in Beispiel 2 angegeben, wird eine Polyurethan-Dispersion hergestellt. Die Reaktionszeit nach Zugabe von HDI betrug 2 Std. Der NCO-Gehalt der acetonischen Lösung lag bei 0,62 %. Nach Zugabe von PUD und Aceton III wird mit Wasser dispergiert.
Man erhält eine feinteilige, stabile Polyurethan-Dispersion mit einem Feststoffgehalt von 42 %.

Beispiel 4

Ausgangsstoffe:

500 g PE ADS/B14 (Molekulargew. $\overline{M}$w 2300)
0,07 g DBTL-Katalysator
134 g Aceton I
24,9 g TDI
24,4 g HDI
537 g Aceton II
14,8 g PUD
242 g Epikote (Epichlorhydrin-Bisphenol A-Addat, $\overline{M}$w = etwa 600 bis 1100, Erweichungstemperatur = 88 bis 115°C)
249 g Aceton III
1208 g Wasser

Verfahrensweise:

Wie in Beispiel 2 angegeben, wird eine acetonische Polymerlösung hergestellt. Die Reaktionszeit nach Zugabe von HDI betrug 2 Std. Der NCO-Gehalt liegt bei 0,59 %. Epikote wird mit Aceton 1 : 1 gelöst und eingerührt. Danach wird Wasser zugegeben.
Die entstehende feinteilige Dispersion hat einen Feststoffgehalt von 41 %.

Beispiel 5

Ausgangsstoffe:

350 g PE ADS/B14 (Molekulargew. $\overline{M}$w 2300)
0,05 g DBTL-Katalysator

94 g Aceton I
17,43 g TDI
17,08 g HDI
376 g Aceton II
10 g PUD
169,2 g Phenol-Formaldehyd-Kondensat, $\overline{M}$ w = etwa 600 bis 1200, Erweichungstemperatur 90 bis 110°C
169,2 g Aceton III
565 g Wasser

Verfahrensweise:

Zur Mischung aus entwässertem Polyesterol PE, Aceton I und Katalysator wird das TDI zugegeben. Nach 1 Stunde Reaktionszeit bei 64°C wird DI zugesetzt. Nach weiteren 2 Stunden Reaktion erfolgt die Zugabe von Aceton II. Der NCO-Wert der Polymerlösung liegt dann bei 0,6 %.

Nach der Kettenverlängerung mit PUD bei 50 °C wird das das Phenol-Formaldehyd-Kondensat gelöst in Aceton III zugesetzt und 5 Minuten bei 50°C gerührt. Nach der Zugabe von Wasser wird das Aceton abdestilliert.

Die entstehende feinteilige Dispersion hat einen Feststoffgehalt von 50 %.

Beispiel 6

Ausgangsstoffe:

350 g PE ADS/B14 (Molekulargew. 2300)
0,05 g DBTL-Katalysator
94 g Aceton I
17,4 g TDI
17 g HDI
376 g Aceton II
6,9 g PUD
3,4 g IPDA
169 g Phenol-Formaldehyd-Kondensat wie in Beispiel 5
169 g Aceton III
381 g Wasser

Verfahrensweise:

Zur Mischung aus PE, Aceton I und Katalysator wird TDI zugegeben. Nach 1 Stunde Reaktion bei 60 °C wird HDI zugegeben. Nach der Zugabe von Aceton II wird mit PUD und IPDA kettenverlängert. Zur acetonischen Lösung des Polymeren wird nach 3 Minuten das Phenol-Formaldehyd-Kondensat gelöst in Aceton III zugetropft. Es wird 5 Minuten bei 50 °C nachgerührt, Wasser zugegeben und danach das Aceton abdestilliert.

Die entstehende feinteilige Dispersion hat einen Feststoffgehalt von 60 %.

Klebtechnische Eigenschaften der erfindungsgemäß (Beispiele 1 - 6) hergestellten Dispersionen

Meßmethoden:

a) Schälwerte auf SBR1-Testmaterial, Sofort- und 5 Tagewerte in N/mm ohne Temperaturaktivierung
b) Wärmestandfestigkeit in °C/N, ohne Temperaturaktivierung
c) Schälwerte auf SBR1-Testmaterial, Sofort- und 5 Tagewerte in N/mm nach Heißaktivierung (T = 80°C)
d) Wärmestandfestigkeit in °C/N nach Wärmeaktivierung bei T = 80°C

Meßergebnisse:

| Beispiel | a) | b) | c) | d) |
|---|---|---|---|---|
| 1 | 2,8/2,95 | 50/20 | 3,30/3,5 | 60/20 |
| 2 | 2,4/2,7 | 50/20 | 1,5/2,4 | 50/15 |
| 3 | 1,0/1,4 | 50/5 | 0,8/2,3 | 50/5 |
| 4 | 0,9/2,6 | 50/20 | 1,0/2,8 | 50/30 |
| 5 | 1,5/2,2 | 50/25 | 2,4/3,2 | 60/10 |
| 6 | 2,7/3,1 | 50/20 | 3,2/3,6 | 60/20 |

Kontaktverklebungen:

(mit der Dispersion aus Beispiel 5, verdickt mit 2 % Vinylpyrrolidoncopolymerisat)

| Verbund | Anpreßdruck $N/mm^2$ | Scherfestigkeit $N/mm^2$ |
|---|---|---|
| Buchensperrholz/Buchensperrholz | 0,5 | 3,0 |
| Buchensperrholz/Buchensperrholz | 7,0 | 6,3 |
| Hart/PVC/Hart-PVC | 0,5 | 2,0 |
| Aluminium/Aluminium | 0,5 | 3,0 |
| Acrylharz/Buchensperrholz | 0,5 | 3,2 |
| Stahlblech/Holz | 0,5 | 1,6 |

**Patentansprüche**

1.  Verfahren zur Herstellung einer emulgatorfreien, wässrigen Polyurethandispersion durch Umsetzung von (a) Dihydroxylverbindungen mit einem Molekulargewicht von 500 bis 5000, (b) Diisocyanaten und (c) Kettenverlängerungsmitteln ohne Salzgruppen mit mindestens 2 gegenüber Isocyanatgruppen reaktionsfähigen Wasserstoffatomen und einem Molekulargewicht unter 300 in der Schmelze oder in Gegenwart eines unter 100°C siedenden, mit Wasser mischbaren, inerten organischen Lösungsmittels (L) zu einem Prepolymeren mit endständigen Isocyanatgruppen, anschließende Umsetzung des - gegebenenfalls in einem organischen Lösungsmittel (L) gelösten - Prepolymeren mit (d) - gegebenenfalls in Wasser gelösten - Alkalisalzen der Additionsprodukte von Ethylendiamin an ungesättigte Carbonsäuren, Dispergieren des erhaltenen Polyurethans in Wasser und - gegebenenfalls - destillative Entfernung des organischen Lösungsmittels, wobei man vor dem Dispergieren des erhaltenen Polyurethans in Wasser 5 bis 60 Gewichtsteile, bezogen auf 100 Gewichtsteile des Polyurethans, eines organischen Kondensations-Harzes, das in einem unter 100°C siedenden Lösungsmittel gelöst ist, zumischt und wobei das molare Verhältnis der Komponente (a) zu der Summe der Isocyanate (b) sowie zu der Summe der Kettenverlängerungsmittel (c) und der Komponente (d) im Bereich von a:b:(c+d) = 1:2:1 bis 1:14:13 liegt.

2.  Verfahren gemäß Anspruch 1, **dadurch gekennzeichnet, daß** man als organisches Kondensations-Harz ein Phenol-Formaldehyd-Kondensations-Harz einsetzt.

3.  Verwendung der gemäß den Patentansprüchen 1 und 2 erhaltenen Verfahrensprodukte als Klebstoffe.

**Claims**

1.  A process for the preparation of an emulsifier-free aqueous polyurethane dispersion by reacting (a) dihydroxy compounds having a molecular weight of from 500 to 5,000, (b) diisocyanates and (c) chain extenders without salt groups having two or more hydrogen atoms reactive to isocyanate groups and having a molecular weight of less than 300, in the melt or in the presence of a water-miscible inert organic solvent (S) boiling below 100°C, to give a prepolymer having terminal isocyanate groups, then reacting the prepolymer, which may be dissolved in an organic solvent (S), with (d) alkali metal of addition salts products of ethylenediamine to unsaturated carboxylic acids, dispersing the resulting polyurethane in water and, if required, removing the organic solvent by distillation, wherein from 5 to 60 parts by weight, based on 100 parts by weight of the polyurethane, of an organic condensation resin which is dissolved in a solvent boiling below 100°C is admixed before the polyurethane obtained is dispersed in water, and wherein the molar ratio of the components (a) to the sum of the isocyanates (b) and to the sum of the chain extenders (c) and of the components (d) is in the range from a : b : (c+d) = 1 : 2 : 1 to 1 : 14 : 13.

2. A process as claimed in claim 1, wherein the organic condensation resin used is a phenol/formaldehyde condensation resin.

3. Use of a product obtained as claimed in claims 1 and 2, as an adhesive.

**Revendications**

1. Procédé de préparation d'une dispersion aqueuse de polyuréthanne, dépourvue d'émulsifiant, par réaction (a) de composés dihydroxylés d'un poids moléculaire de 500 à 5.000, (b) de diisocyanates et (c) d'agents d'allongement des chaînes sans groupe salin comportant au moins 2 atomes d'hydrogène susceptibles de réagir avec des radicaux isocyanate et d'un poids moléculaire inférieur à 300, à l'état fondu ou en présence d'un solvant (L) organique, inerte, miscible à l'eau, bouillant en dessous de 100°C, de manière à obtenir un prépolymère à radicaux isocyanate terminaux, réaction subséquente du prépolymère - éventuellement dissous dans un solvant organique (L) - avec (d) des sels de métal alcalin des produits d'addition d'éthylènediamine sur des acides carboxyliques insaturés - éventuellement dissous dans de l'eau -, dispersion du polyuréthanne obtenu dans de l'eau et - éventuellement - élimination par distillation du solvant organique, dans lequel, avant la dispersion du polyuréthanne obtenu dans de l'eau, on ajoute sous mélange 5 à 60 parties en poids, par rapport à 100 parties en poids du polyuréthanne, d'une résine de condensation organique, dissoute dans un solvant bouillant en dessous de 100°C, le rapport molaire entre le composant (a) et la somme des isocyanates (b) ainsi que la somme des agents d'allongement des chaînes (c) et des composants (d) est de l'ordre de a/b/(c+d) = 1/2/1 à 1/14/13.

2. Procédé suivant la revendication 1, **caractérisé en ce qu'**à titre de résine de condensation organique, on utilise une résine de condensation de phénol et de formaldéhyde.

3. Utilisation des produits obtenus par mise en oeuvre du procédé suivant les revendications 1 et 2, à titre de colles.